# EUROPEAN PATENT SPECIFICATION

(11) **EP 2 144 417 B1**
(45) Date of publication and mention of the grant of the patent: **30.11.2011**
(21) Application number: 08784103.7
(22) Date of filing: 22.08.2008
(51) Int. Cl.: H04L 12/56, H04L 12/18, H04L 29/08

(54) **METHOD, SYSTEM AND APPARATUS FOR ADMISSION CONTROL OF MULTICAST OR UNICAST**
VERFAHREN, SYSTEM UND VORRICHTUNG ZUR ZUGRIFFSKONTROLLE VON MULTICAST ODER UNICAST
PROCÉDÉ, SYSTÈME ET APPAREIL DE COMMANDE D'ADMISSION MULTIDIFFUSION OU MONODIFFUSION

(30) Priority: 24.08.2007 CN 200710138794
(43) Date of publication of application: 13.01.2010
(73) Proprietor: Huawei Technologies Co., Ltd., Longgang District, Shenzhen Guangdong 518129 (CN)
(72) Inventor: LI, Jun, Longgang District Shenzhen 518129 (CN); GU, Huailong, Longgang District Shenzhen 518129 (CN); ZOU, Ting, Longgang District Shenzhen 518129 (CN); LV, Zhenzhu, Longgang District Shenzhen 518129 (CN); ZHANG, Xialioan, Longgang District Shenzhen 518129 (CN)
(74) Representative: Kreuz, Georg Maria
(86) International application number: PCT/CN2008/072112
(87) International publication number: WO 2009/026844

(56) References cited:
- CN-A- 1 949 812
- CN-A- 101 009 636
- CN-A- 101 009 695
- JP-A- 2004 260 291
- "Telecommunications and Internet Converged Services and Protocols for Advanced Networking (TISPAN); Resource and Admission Control Sub-system (RACS); Functional Architecture; Release 2; draft ETSI TS 182 019" ETSI STANDARDS, LIS, SOPHIA ANTIPOLIS CEDEX, FRANCE, vol. TISPAN, no. V0.7.2, 1 July 2007 (2007-07-01), XP014039374 ISSN: 0000-0001
- NEGRU ET AL: "Dynamic bandwidth allocation for efficient support of concurrent digital TV and IP multicast services in DVB-T networks" COMPUTER COMMUNICATIONS, ELSEVIER SCIENCE PUBLISHERS BV, AMSTERDAM, NL LNKD- DOI:10.1016/J.COMCOM.2005.07.017, vol. 29, no. 6, 31 March 2006 (2006-03-31) , pages 741-756, XP005333982 ISSN: 0140-3664
- "Telecommunications and Internet converged Services and Protocols for Advanced Networking (TISPAN); Resource and Admission Control Sub-System (RACS): Functional Architecture; ETSI ES 282 003" 1 May 2008 (2008-05-01), ETSI STANDARD, EUROPEAN TELECOMMUNICATIONS STANDARDS INSTITUTE (ETSI), SOPHIA ANTIPOLIS CEDEX, FRANCE , XP014041952 * page 125 - page 134 *

## Description

### Field of the Invention

The present invention relates to a communication technology, and in particular, to a Method, System, and Apparatus for Admission Control (AC) of Multicast or Unicast.

### Background of the Invention

For services that consume a lot of bandwidths and do not tolerate any loss of packets, such as the Internet Protocol Television (IPTV) video, a network bandwidth, and especially, a user link bandwidth is generally very limited. To ensure effective development of video services and the Quality of Service (QoS), a network must be provided with the Resource Management (RM) function and the AC function.

IPTV services are classified into two types, namely, multicast/broadcast video services and unicast video services, such as BTV and Video On Demand (VOD). The difference between the multicast service mode and the unicast service mode is great, and therefore, implementations of the AC function are different.

In the prior art, multicast AC is performed on an Access Node (AN). The AN includes an X-Resource and Admission Control Function (X-RACF). After the AN receives a multicast request sent by a User Equipment (UE), the X-RACF judges whether there is sufficient resources; that is, the X-RACF judges whether a user link bandwidth meets the bandwidth requirement when a UE requests to join a channel, or judges whether the number of channels that the UE has joined exceeds the specified maximum number. If the bandwidth is insufficient or the number of channels exceeds the maximum number, AC fails, and the AN rejects the join request of the UE.

Generally, unicast AC is completed by an independent RM server. The RM server includes an Access Resource and Admission Control Function (A-RACF). The A-RACF knows the network topology and manages an end-to-end bandwidth from an Application Function (AF), such as a unicast video server, to a UE. Therefore, when a UE requests a unicast video service, the AF requests resources from the A-RACF; the A-RACF judges whether an end-to-end bandwidth is met, and then returns a resource request result; the AF determines whether to admit the service according to the resource request result.

One solution in the prior art is as follows: A multicast service and a unicast service reserve access line resources respectively, and do not occupy the access line resources of each other; an X-RACF implements multicast AC of an access line; and an A-RACF implements unicast AC of an access line. Multicast AC and unicast AC are independent without mutual impacts. Therefore, multicast services cannot share bandwidth resources with unicast services. As a result, bandwidth resources are wasted. In addition, when multicast bandwidth resources are insufficient, multicast services cannot be provided for users.

In another solution of the prior art, an A-RACF implements not only unicast AC of an access line but also the following function: when joining a multicast channel, a UE sends a multicast request to an AN; the AN reports information about a channel joined by the UE to the A-RACF; the A-RACF judges whether a user link bandwidth meets the requirements; if the user link bandwidth does not meet the requirements, the A-RACF notifies the AN to reject the join request of the UE. The AN reports multicast join information of the UE, and the A-RACF performs AC in a unified manner. Thus the multicast implementation mode and the unicast implementation mode are unified, and the resource waste is avoided. In the solution, when a multicast traffic channel is switched, interworking with the A-RACF is required; therefore, the switching takes a long time, and the user experience is poor. In addition, implementation of the solution is complex. The switching frequency of multicast services is higher than that of unicast services. When all users switch channels, the AN reports information about channel switching of the users to the A-RACF. When many TV users switch channels frequently, a huge amount of information is exchanged, and the AN is required to have very high performance. The AN, however, does not perform AC.

"Telecommunications and Internet Converged Services an dProtocols for Advanced Networking (TISPAN); Resource and Admission Control Sub-system (RACS); Functional Architecture; Release 2; V0.7.2, 1 July 2007 (2007-07-01), XP014039374, ISSN: 0000-0001 describes the functional architecture for the Resource and Admission Control Subsystem. Specially, section H.5.3 of D1 relates to unicast and multicast applications share resources on the access segment. The Unicast and Multicast services share the same total budged, i.e. transport resource, on the Access Segment. This share of the total budget is dynamically adapted using the Rr reference point.

### Summary of the Invention

A multicast AC method is provided by the present invention so that fast switching of multicast traffic channels is ensured when multicast service resources and unicast service resources are shared.

A multicast AC system and apparatus are provided by the present invention so that fast switching of multicast traffic channels is ensured when multicast service resources and unicast service resources are shared.

A unicast AC method is provided by the present invention so that multicast service resources and unicast service resources can be shared. In addition, the implementation is simple.

A unicast AC system and apparatus are provided by the present invention so that multicast service resources and unicast service resources can be shared. In addition, the implementation is simple.

To achieve the above objectives, the technical solution of embodiments of the present invention is implemented as follows:
As a first aspect of the invention the multicast AC method includes the steps of claim 1.
As a second aspect of the invention the multicast AC system includes a network device and a resource AC device as disclosed in claim 4.
As a third aspect of the invention the network device includes: a multicast request interface module, configured to receive a multicast request; a resource request interface module, configured to: send an external resource request to a resource AC device, and receive an AC operation result returned by the resource AC device in response to the external resource request; and an AC operating module, configured to: perform multicast resource AC according to the multicast request, send the external resource request to the resource AC device through the resource request interface module when multicast resources are insufficient, and perform a multicast operation according to the AC operation result returned by the resource AC device in response to the external resource request.
As a fourth aspect of the invention the resource AC device includes: a resource request interface module, configured to receive an external resource request sent by a network device when multicast resources are insufficient; and an AC operating module, configured to: perform AC according to the external resource request, and return an AC operation result to the network device through the resource request interface module.
As a fifth aspect of the invention the unicast AC method includes in the steps of claim 6.
As a sixth aspect of the invention the unicast AC system includes a resource AC device and a network device as disclosed in claim 9.
As a seventh aspect of the invention the resource AC device includes: a unicast resource request interface module, configured to receive a unicast resource request; a resource request interface module, configured to send an external resource request to a network device, and receive an AC operation result returned by the network device in response to the external resource request; and an AC operating module, configured to: perform unicast resource AC according to the unicast resource request, send the external resource request to the network device through the resource request interface module when unicast resources are insufficient, and perform a unicast operation according to the AC operation result returned by the network device in response to the external resource request.
As an eighth aspect of the invention the network device includes: a resource request interface module, configured to receive an external resource request sent by a resource AC device when unicast resources are insufficient; and an AC operating module, configured to perform AC according to the external resource request, and return an AC operation result to the resource AC device through the resource request interface module.

In the multicast AC method, system and device provided in embodiments of the present invention, multicast resources are allocated for multicast services. When performing AC according to a received multicast request and determining that multicast resources are insufficient, the AN requests external resources from the A-RACF. The A-RACF performs AC for external resources. The AN performs the corresponding operation according to the AC operation result. In the technical solution of embodiments of the present invention, when determining that resources are insufficient, the AN may request the A-RACF to allocate resources for multicast services. Thus, multicast service resources and unicast service resources can be shared, and the resource waste is avoided. In addition, the AN does not need to report channel switching information to the A-RACF, and therefore, the AN does not need to exchange a huge amount of information with the A-RACF when many users switch channels, thus reducing the implementation complexity of the AN. User requirements are met without any impact on other service streams, and multicast services are provided for users. During channel switching, without interworking with the A-RACF, multicast replication can be implemented, thus reducing the switching delay and implementing fast switching of channels.

In the unicast AC method, system and device provided in embodiments of the present invention, multicast resources are allocated for unicast services. When performing AC according to a unicast request and determining that unicast resources are insufficient, the A-RACF requests external resources from the AN that has a built-in X-RACF. The AN performs resource AC and returns a result. The A-RACF performs the corresponding operation according to the AC operation result. Therefore, with the technical solution of embodiments of the present invention, multicast service resources and unicast service resources can be shared, and the resource waste is avoided. In addition, the implementation of the method is simple.

### Brief Description of the Drawings

FIG. 1 is a flowchart of a multicast AC method according to an embodiment of the present invention;
FIG. 2 is a flowchart of a multicast request/release method when the resource sum is less than a preset threshold according to an embodiment of the present invention;
FIG. 3 is a flowchart of a multicast request/release method when the resource sum is more than a preset threshold according to an embodiment of the present invention;
FIG. 4 is a flowchart of a multicast request/rejection method when the resource sum is more than a preset threshold according to an embodiment of the present invention;
FIG. 5 shows a multicast AC system according to an embodiment of the present invention;
FIG. 6 shows a network device according to an embodiment of the present invention;
FIG. 7 shows a resource AC device according to an embodiment of the present invention;
FIG. 8 is a flowchart of a unicast AC method according to an embodiment of the present invention;
FIG. 9 is a flowchart of a unicast request/release method when the resource sum is less than a preset threshold according to an embodiment of the present invention;
FIG. 10 is a flowchart of a unicast request/release method when the resource sum is more than a preset threshold according to an embodiment of the present invention;
FIG. 11 is a flowchart of a unicast request/rejection method when the resource sum is more than a preset threshold according to an embodiment of the present invention;
FIG. 12 shows a unicast AC system according to an embodiment of the present invention;
FIG. 13 shows a resource AC device according to an embodiment of the present invention; and
FIG. 14 shows a network device according to an embodiment of the invention.

### Detailed Description of the Invention

The present invention is described in detail with reference to the accompanying drawings and specific embodiments hereunder.

A multicast and/or a unicast AC method provided in embodiments of the present invention are applied in a communication system that includes a network device and a resource control device. The network device may be an AN, an aggregation device, a Broadband Remote Access Server (BRAS), and an SR that have a built-in X-RACF. The resource control device may be an A-RACF.

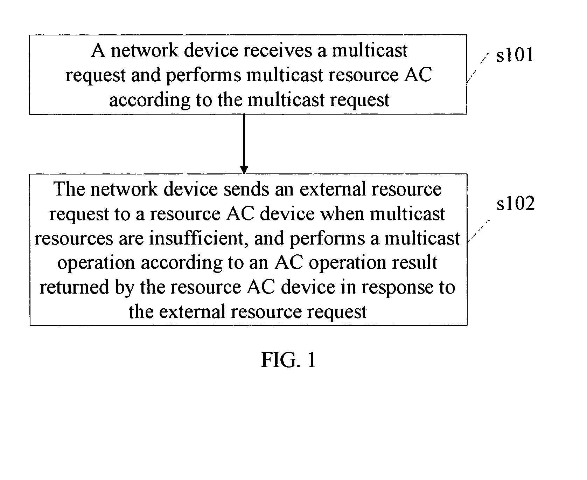

A multicast AC method in embodiments of the present invention includes allocating multicast resources for multicast services in advance. A network device completes multicast AC for an access line and allocates multicast resources for multicast services. FIG. 1 is a flowchart of a multicast AC method in an embodiment of the present invention. FIG. 1 includes the following steps:
s101. A network device receives a multicast request and performs multicast resource AC according to the multicast request.
s102. The network device sends an external resource request to a resource AC device when multicast resources are insufficient, and performs a multicast operation according to an AC operation result returned by the resource AC device in response to the external resource request.

In this embodiment, the multicast AC method further includes setting a multicast resource threshold for multicast services when allocating multicast resources for multicast services.

In the embodiments hereunder, a network device is an AN that has a built-in X-RACF, and a resource AC device is an A-RACF.

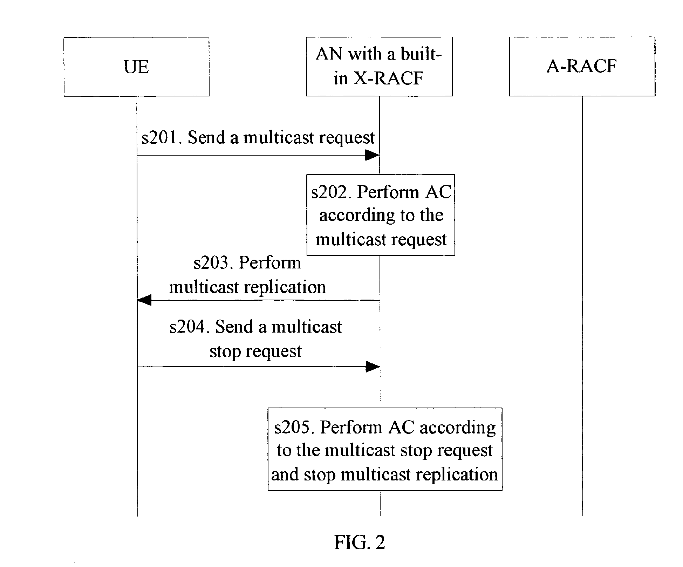

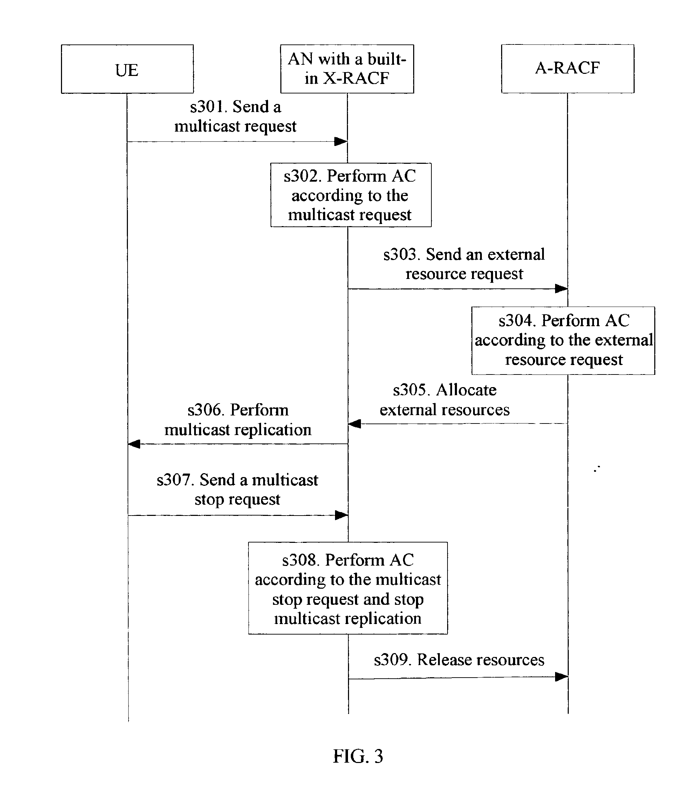

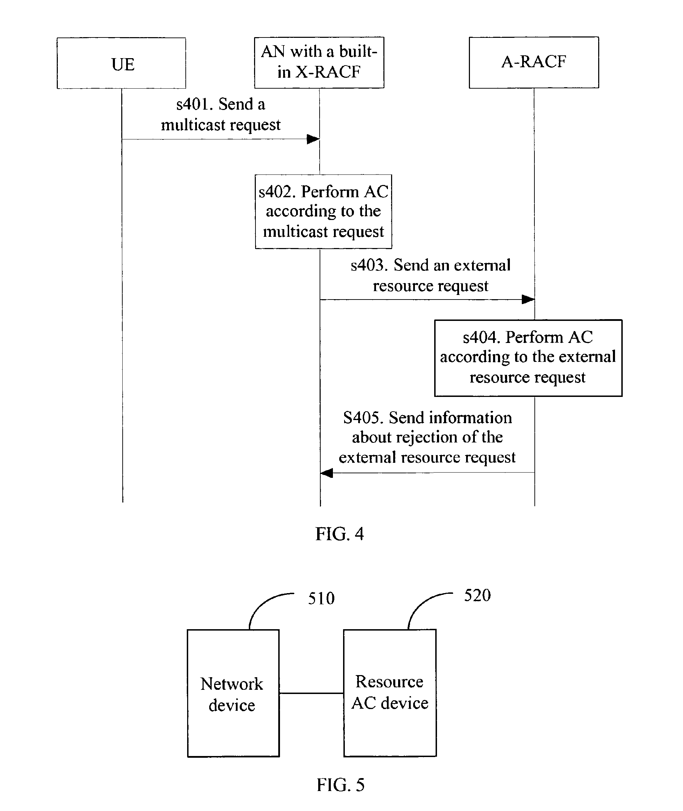

When the X-RACF performs AC according to the multicast request in step s102, the X-RACF checks whether the sum of the currently occupied multicast resources and the resources required in the multicast request is more or less than the preset multicast resource threshold. When the sum is less than the threshold, a process is executed according to the method flowchart shown in FIG. 2. When the sum is more than the threshold, a process is executed according to the method flowchart shown in FIG. 3 or FIG. 4.

FIG. 2 is a flowchart of a multicast request/release method when the resource sum is less than a preset threshold in an embodiment of the present invention. FIG. 2 includes the following steps:
s201. A UE sends a multicast request such as an Internet Group Management Protocol (IGMP) join message to an AN that has a built-in X-RACF.
   The multicast request in this step may be a request for joining a multicast channel or a request for switching from one multicast traffic channel to another multicast traffic channel.
s202. The X-RACF performs AC according to the multicast request. In this step, the sum of the currently occupied multicast resources and the multicast resources required in the multicast request is less than a preset multicast resource threshold, and therefore, multicast resources are sufficient.
s203. The AN performs multicast replication according to the multicast request.
   When the UE does not require multicast services, the AC process of multicast stop includes the following steps:

s204. The UE sends a multicast stop request such as an IGMP leave message to the AN that has a built-in X-RACF.
s205. The X-RACF performs AC according to the multicast stop request and stops multicast replication for the multicast request.

FIG. 3 is a flowchart of a multicast request/release method when the resource sum is more than a threshold in an embodiment of the present invention. FIG. 3 includes the following steps:
s301. A UE sends a multicast request such as an IGMP join message to an AN that has a built-in X-RACF.
s302. The X-RACF performs AC according to the multicast request. In this step, the sum of the currently occupied multicast resources and the multicast resources required in the multicast request is more than a preset multicast resource threshold, and therefore, multicast resources are insufficient.
s303. The X-RACF sends an external resource request to an A-RACF.
s304. The A-RACF performs AC according to the external resource request. In this step, if the sum of the currently occupied unicast resources and the multicast resources required in the external resource request is less than a preset unicast resource threshold, it indicates that unicast resources are sufficient. When determining that unicast resources are sufficient, the A-RACF admits the external resource request from the X-RACF and proceeds to step s305.
s305. The A-RACF allocates external resources for the X-RACF.
s306. The AN performs multicast replication according to the multicast request.

When the UE does not require multicast services, the AC process of multicast stop includes the following steps:
s307. The UE sends a multicast stop request such as an IGMP leave message to the AN.
s308. The X-RACF performs AC according to the multicast stop request and stops multicast replication for the multicast request.
s309. The X-RACF releases all or part of the resources allocated by the A-RACF. In this step, releasing resources may be performed in the following cases: when the X-RACF does not require the resources; after a preset timer expires; when unicast resources of the A-RACF are insufficient; or when the A-RACF requests external resources from the X-RACF after the A-RACF receives the unicast request. Releasing resources may be performed immediately, or performed according to a preset return policy, for example, a preset return threshold (a percentage or bandwidth size). For example, the X-RACF borrows a bandwidth of 5 Mbit/s from the A-RACF. When releasing resources, the X-RACF may release a bandwidth of 2 Mbit/s for the first time and release the remaining bandwidth of 3 Mbit/s for the second time according to the preset return percentage or bandwidth size.

Optionally, an X-RACF in an AN borrows unicast resources from an A-RACF, and therefore, the A-RACF may adopt the forced obtaining mode when the X-RACF in an AN uses external resources to implement multicast services; that is, when unicast resources of the A-RACF are insufficient, the A-RACF may force the X-RACF in an AN to disconnect certain multicast services and return the borrowed resources.

Optionally, the X-RACF in an AN may return the borrowed resources or other idle resources to the A-RACF according to the current actual resource usage.

FIG. 4 is a flowchart of a multicast request/rejection method when the resource sum is more than a threshold in an embodiment of the present invention. FIG. 4 includes the following steps:
Steps s401-s403 are the same as steps s301-s303, and will not be described further.
s404. The A-RACF performs AC according to the external resource request. In this step, the sum of the currently occupied unicast resources and the multicast resources required in the external resource request is more than a preset unicast resource threshold, and therefore, unicast resources are insufficient. When determining that unicast resources are insufficient, the A-RACF rejects the external resource request from the X-RACF and proceeds to step s405.
s405. The A-RACF sends information about rejection of the external resource request to the X-RACF.

This embodiment describes a case where idle multicast resources cannot meet the multicast request of the UE and the idle unicast resources of the A-RACF also cannot meet the multicast request, and therefore, the multicast request of the UE is rejected.

Based on the foregoing method, an embodiment of the present invention further provides a multicast AC system. As shown in FIG. 5, the system includes a network device 510 and a resource AC device 520.

The network device 510 is configured to: receive a multicast request, perform multicast resource AC according to the multicast request, send an external resource request to the resource AC device 520 when multicast resources are insufficient, and perform a multicast operation according to an AC operation result returned by the resource AC device 520 in response to the external resource request.

The resource AC device 520 is configured to receive the external resource request, perform AC according to the external resource request, and return the AC operation result to the network device 510.

Based on the foregoing method, an embodiment of the present invention further provides a network device.

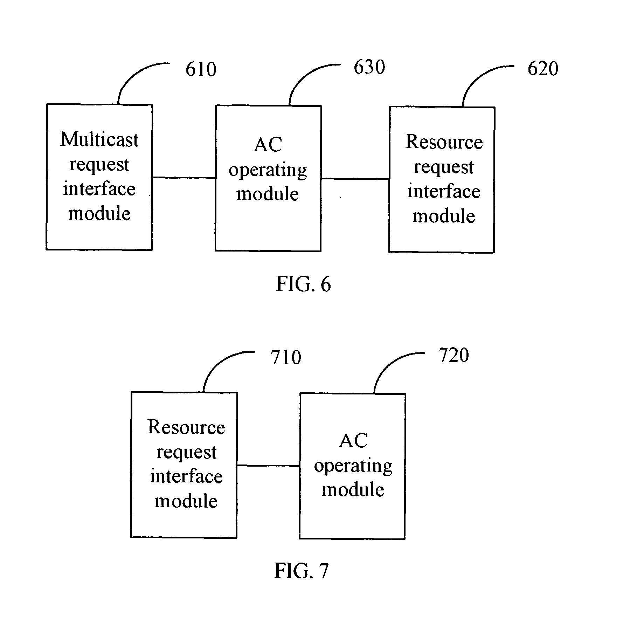

As shown in FIG. 6, the network device includes: a multicast request interface module 610, configured to receive a multicast request; a resource request interface module 620, configured to send an external resource request to a resource AC device, and receive an AC operation result returned by the resource AC device in response to the external resource request; and an AC operating module 630, configured to: perform multicast resource AC according to the multicast request, send the external resource request to the resource AC device through the resource request interface module 620 when multicast resources are insufficient, and perform a multicast operation according to the AC operation result returned by the resource AC device in response to the external resource request.

Based on the foregoing method, an embodiment of the present invention further provides a resource AC device.

As shown in FIG. 7, the resource AC device includes: a resource request interface module 710, configured to receive an external resource request sent by a network device when multicast resources are insufficient; and an AC operating module 720, configured to perform AC according to the external resource request, and return an AC operation result to the network device through the resource request interface module 710.

Therefore, in the multicast AC method, system and device provided in the embodiments of the present invention, multicast resources are allocated for multicast services in advance, and a multicast resource threshold is set; when multicast resources are insufficient, an X-RACF requests external resources from an A-RACF. Thus, multicast service resources and unicast service resource can be shared; the resource utilization is improved; and the resource waste is avoided. In addition, when a user switches a channel, the X-RACF does not need to report information about channel switching to the A-RACF. Therefore, fast switching of multicast traffic channels is ensured.

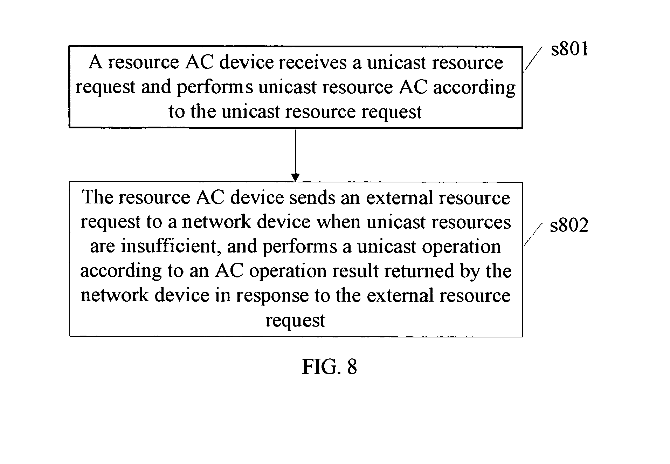

An embodiment of the present invention further provides a unicast AC method. FIG. 8 is a flowchart of a unicast AC method in an embodiment of the present invention. In this embodiment, unicast resources are allocated for unicast services in advance; the
unicast resources are controlled by a resource AC device; and the resource AC device allocates unicast resources for unicast services. The method includes the following steps:
   s801. A resource AC device receives a unicast resource request and performs unicast resource AC according to the unicast resource request.
   s802. The resource AC device sends an external resource request to a network device when unicast resources are insufficient.

The resource AC device performs a unicast operation according to an AC operation result returned by the network device in response to the external resource request.

In this embodiment, the unicast AC method further includes setting a unicast resource threshold for unicast services when allocating unicast resources for unicast services.

In the descriptions hereunder, a resource AC device is an A-RACF, and a network device is an AN that has a built-in X-RACF.

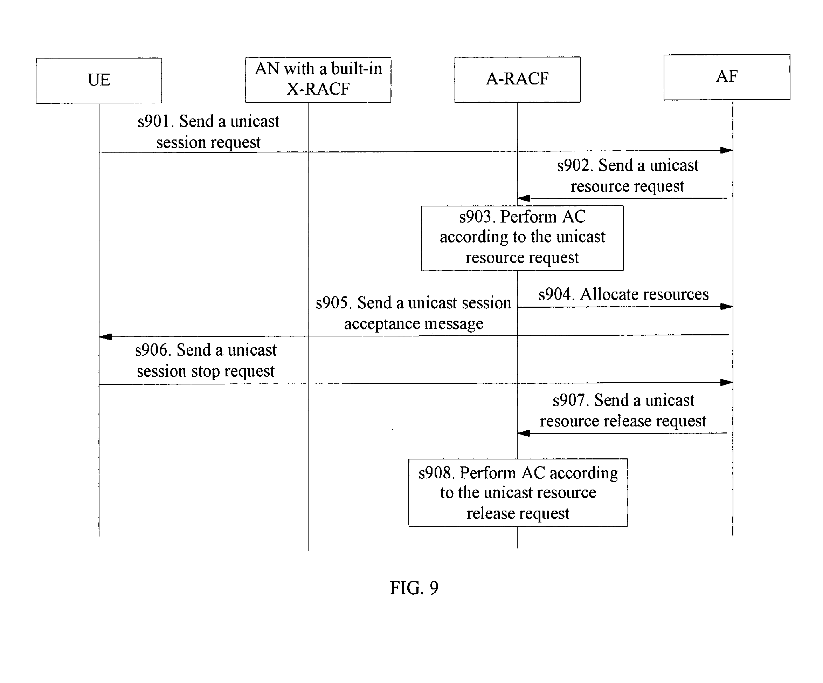

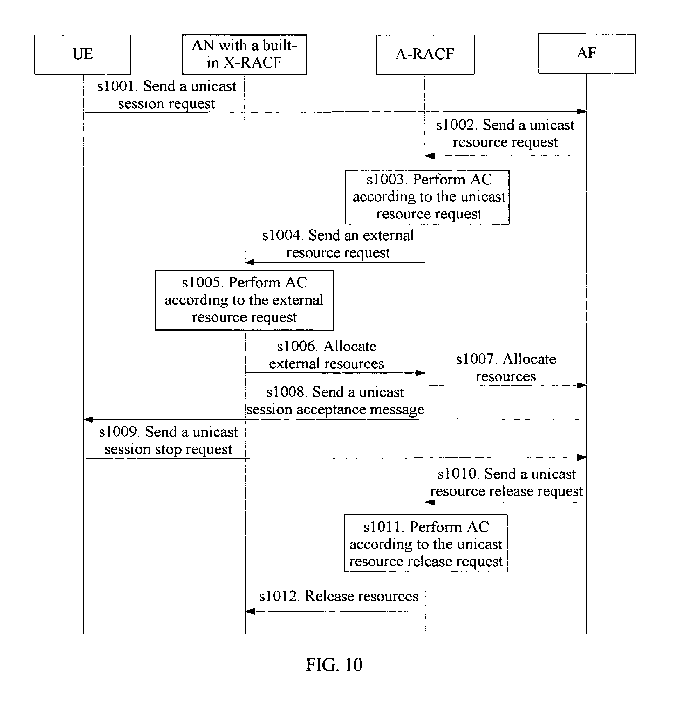

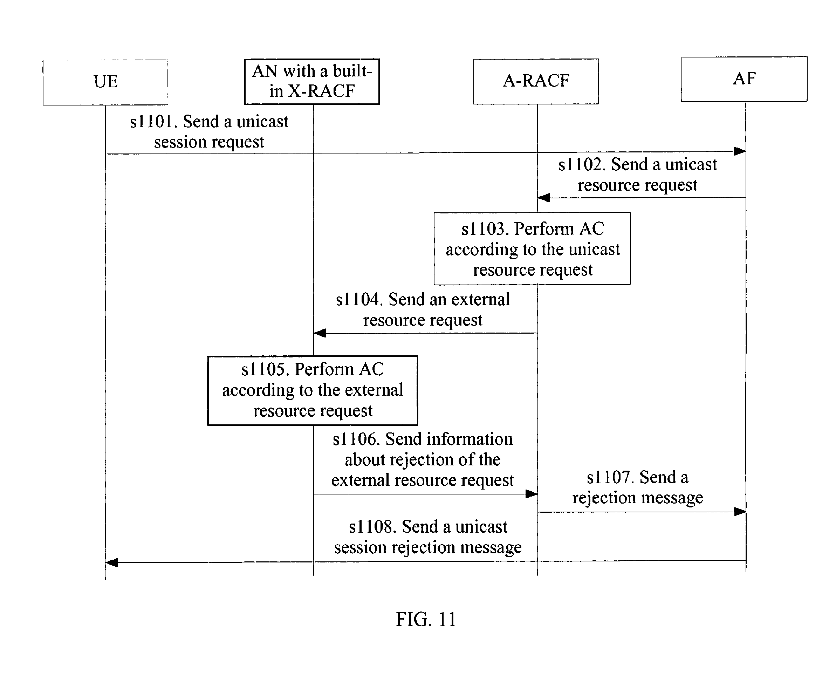

When the A-RACF performs AC according to the unicast resource request in step s802, the A-RACF checks whether the sum of the currently occupied unicast resources and the resources required in the unicast resource request is more or less than a preset unicast resource threshold. When the sum is less than the threshold, a process is executed according to the method flowchart shown in FIG. 9. When the sum is more than the threshold, a process is executed according to the method flowchart shown in FIG. 10 or FIG. 11.

FIG. 9 is a flowchart of a unicast request/release method when the resource sum is less than a preset threshold in an embodiment of the present invention. FIG. 9 includes the following steps:
s901. A UE sends a unicast session request to an AF.
s902. After receiving the unicast session request, the AF sends a unicast resource request to an A-RACF.
s903. The A-RACF performs AC according to the unicast resource request. In this step, the sum of the currently occupied unicast resources and the unicast resources required in the unicast request is less than a preset unicast resource threshold, and therefore, unicast resources are sufficient.
s904. The A-RACF allocates resources according to the unicast resource request.
s905. The AF sends a unicast session acceptance message to the UE.

When the UE does not require unicast services, the AC process of unicast stop includes the following steps:
s906. The UE sends a unicast session stop request to the AF.
s907. After receiving the unicast session stop request, the AF sends a unicast resource release request to the A-RACF.
s908. The A-RACF performs AC according to the unicast resource release request, and releases the resources allocated according to the unicast resource request.

FIG. 10 is a flowchart of a unicast request/release method when the resource sum is more than a preset threshold in an embodiment of the present invention. FIG. 10 includes the following steps:
s1001. A UE sends a unicast session request to an AF.
s1002. After receiving the unicast session request, the AF sends a unicast resource request to an A-RACF.
s1003. The A-RACF performs AC according to the unicast resource request. In this step, the sum of the currently occupied unicast resources and the unicast resources required in the unicast request is more than a preset unicast resource threshold, and therefore, unicast resources are insufficient.
s1004. The A-RACF sends an external resource request to an X-RACF.
s 1005. The X-RACF performs AC according to the external resource request. In this step, the sum of the currently occupied multicast resources and the unicast resources required in the external resource request is less than a preset multicast resource threshold, and therefore, multicast resources are sufficient. When determining that multicast resources are sufficient, the X-RACF admits the external resource request from the A-RACF and proceeds to step s1006.
s1006. The X-RACF allocates external resources for the A-RACF.
s1007. The A-RACF allocates resources according to the unicast resource request.
s1008. The AF sends a unicast session acceptance message to the UE.

When the UE does not require unicast services, the AC process of unicast stop includes the following steps:
s1009. The UE sends a unicast session stop request to the AF.
s1010. After receiving the unicast session stop request, the AF sends a unicast resource release request to the A-RACF.
s1011. The A-RACF performs AC according to the unicast resource release request.
s1012. The A-RACF releases all or part of the resources allocated by the X-RACF. In this step, releasing resources may be performed in the following cases: when the A-RACF does not require the resources; after a preset timer expires; when multicast resources of the X-RACF are insufficient; or when the X-RACF requests external resources from the A-RACF after the X-RACF receives the unicast request. Releasing resources may be performed immediately, or performed according to a preset return policy, for example, a preset return threshold (a percentage or bandwidth size). For example, the A-RACF borrows a bandwidth of 5 Mbit/s from the X-RACF. When releasing resources, the A-RACF may release a bandwidth of 2 Mbit/s for the first time and release the remaining bandwidth of 3 Mbit/s for the second time according to the preset return percentage or bandwidth size.

In addition, an A-RACF borrows multicast resources from an X-RACF in an AN, and therefore, the X-RACF in an AN may adopt the forced obtaining mode when the A-RACF uses external resources to implement unicast services; that is, when multicast resources of the X-RACF in an AN are insufficient, the X-RACF in an AN may force the A-R.ACF to disconnect certain unicast services and return the borrowed resources.

FIG. 11 is a flowchart of a unicast request/rejection method when the resource sum is more than a preset threshold in an embodiment of the present invention. FIG. 11 includes the following steps:
Steps s1101-s1104 are the same as steps s1001-s1004, and will not be described further.
s1105. The X-RACF performs AC according to the external resource request. In this step, the sum of the currently occupied multicast resources and the unicast resources required in the external resource request is more than a preset multicast resource threshold, and therefore, multicast resources are insufficient. When determining that multicast resources are insufficient, the X-RACF rejects the external resource request from the A-RACF and proceeds to step s1106.
s1106. The X-RACF sends information about rejection of the external resource request to the A-RACF.
s1107. The A-RACF sends a rejection message to the AF.
s1108. The AF sends a unicast session rejection message to the UE.

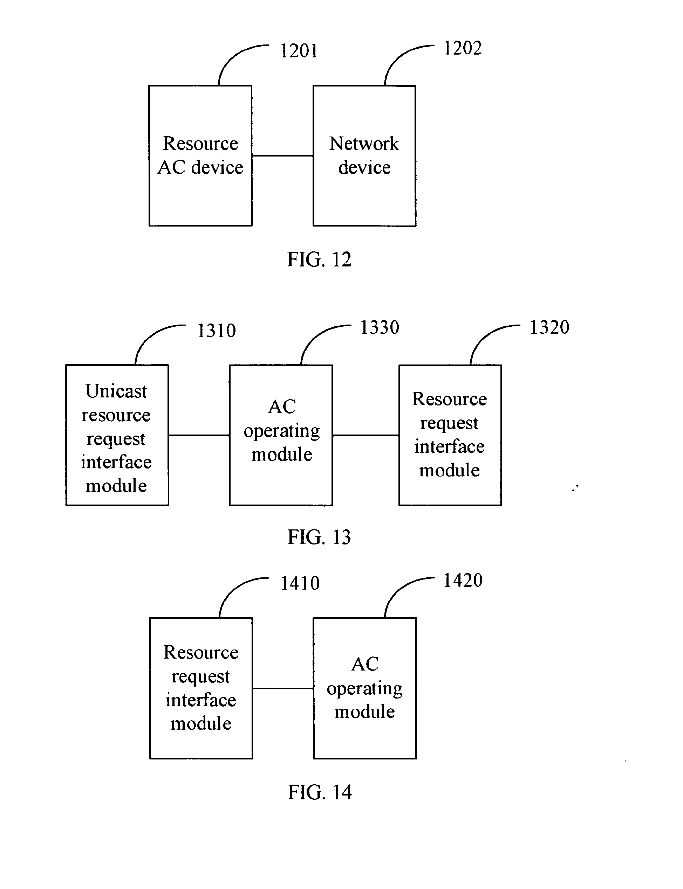

Based on the foregoing unicast AC method, an embodiment of the present invention further provides a unicast AC system. As shown in FIG. 12, the system includes a resource AC device 1201 and a network device 1202.

The resource AC device 1201 is configured to: receive a unicast resource request, perform unicast resource AC according to the unicast resource request, send an external resource request to the network device when unicast resources are insufficient, and perform a unicast operation according to an AC operation result returned by the network device in response to the external resource request.

The network device 1202 is configured to perform AC according to the external resource request, and return the AC operation result to the resource AC device.

Based on the foregoing unicast AC method, as shown in FIG. 13, an embodiment of the present invention further provides a resource AC device. The resource AC device includes: a unicast resource request interface module 1310, configured to receive a unicast resource request; a resource request interface module 1320, configured t: send an external resource request to a network device, and receive an AC operation result returned by the network device in response to the external resource request; and an AC operating module 1330, configured to: perform unicast resource AC according to the unicast resource request, send the external resource request to the network device through the resource request interface module 1320 when unicast resources are insufficient, and perform a unicast operation according to the AC operation result returned by the network device in response to the external resource request.

Based on the foregoing unicast AC method, as shown in FIG. 14, an embodiment of the present invention further provides a network device. The network device includes: a resource request interface module 1410, configured to receive an external resource request sent by a resource AC device when unicast resources are insufficient; and an AC operating module 1420, configured to perform AC according to the external resource request, and return an AC operation result to the resource AC device through the resource request interface module 1410.

Therefore, in the unicast AC method, system and device provided in the embodiments of the present invention, unicast resources are allocated for unicast services in advance, and a unicast resource threshold is set; when unicast resources are insufficient, an A-RACF requests external resources from an X-RACF. Thus, multicast service resources and unicast service resources can be shared; the resource utilization is improved; and the resource waste is avoided. In addition, the implementation of the method is simple.

It is understandable to those skilled in the art that the foregoing multicast AC method, system and device, and unicast AC method, system and device may be combined. That is, when multicast resources are insufficient, the X-RACF may request external resources from the A-RACF, and when multicast services are complete, the X-RACF returns part or all of the resources requested from the A-RACF; when unicast resources are insufficient, the A-RACF may request external resources from the X-RACF, and when unicast services are complete, the A-RACF returns part or all of the resources requested from the X-RACF. The return time and mode may be flexibly set according to requirements.

It is understandable to those skilled in the art that the foregoing X-RACF and A-RACF may also be a Transport Resource Control - Functional Entity (TRC-FE) and a Policy Decision - Functional Entity (PD-FE) in the International Telecommunication Union - Telecommunication Standardization Sector (ITU-T) standards or the corresponding functional entities in other standards.

After reading the foregoing embodiments, those skilled in the art are clearly aware that the present invention may be implemented through hardware, or through software in addition to a necessary universal hardware platform. In most circumstances, it is better to implement the present invention through software in addition to a necessary universal hardware platform. Based on such understanding, the technical solution of the invention or contributions to the prior art may be embodied by a software product. The software product is stored in a storage medium and incorporates several instructions to instruct a computer device, for example, a personal computer, a server, or a network device, to execute the method provided by each embodiment of the invention.

The foregoing embodiments are exemplary embodiments of the present invention only and are not intended to limit the present invention.

## Claims

1. A multicast Admission Control (AC) method, presetting a multicast resource threshold for multicast services and a unicast resource threshold for unicast services; the method comprising:
receiving (s101), by a network device, a multicast request and performing multicast resource AC according to the multicast request;
sending (s102), by the network device, an external resource request to a resource AC device **characterized by**: the sending, by the network device, of the external resource request to the resource AC device is done when a sum of currently occupied multicast resources and multicast resource required in the multicast is bigger than the preset multicast resource threshold;
performing (s304), by the resource AC device, AC according to the external resource request admitting (s304), by the resource AC device, the external resource request when a sum of currently occupied unicast resources and the multicast resources required in the external resource request is lower than the preset unicast resource threshold;
allocating (s305), by the resource AC device, unicast resources for the network device; sending, by the resource AC device, an AC operation result to the network device in response to the external resource request ;
performing, by the network device, a multicast operation according to the AC operation result returned by the resource AC device in response to the external resource request; and
forcing, by the resource AC device, the network device to disconnect certain multicast services and return the borrowed unicast resources when unicast resources of the resource AC device are insufficient.

2. The method of claim 1, further comprising:
receiving, by the network device, a multicast stop request;
stopping multicast replication according to the multicast stop request, and
releasing all or part of resources allocated by the resource AC device.

3. The method of claim 2, wherein the releasing the resources allocated by the resource AC device comprises:
releasing the resources when the network device does not require the resources; or
releasing the resources when the resource AC device detects that unicast resources are insufficient; or
releasing the resources when unicast resources required in a unicast request are insufficient after the resource AC device receives the unicast request; or
releasing the resources according to a preset resource return policy; or
releasing the resources after a preset timer expires.

4. A multicast Admission Control (AC) system, comprising a network device (1202) and a resource AC device (1201), a multicast resource threshold for multicast services is preset to the network device (1202) and a unicast resource threshold for unicast services is preset to the resource AC device (1201), wherein:
the network device (1202) is configured to: receive a multicast request, perform multicast resource AC according to the multicast request, the network device (1202) being **characterized in that** it is configured to: send an external resource request to the resource AC device when a sum of currently occupied multicast resources and multicast resource required in the multicast is bigger than the preset multicast resource threshold, and perform a multicast operation according to an AC operation result returned by the resource AC device in response to the external resource request; and
the resource AC device (1201) is configured to: receive the external resource request, the resource AC device (1201) being **characterized in that** it is configured to: perform AC according to the external resource request, admit the external resource request when a sum of currently occupied unicast resources and the multicast resources required in the external resource request is lower than the preset unicast resource threshold, allocate unicast resources for the network device and return the AC operation result to the network device in response to the external resource request;
the resource AC device (1201) is further configured to force the network device to disconnect certain multicast services and return the borrowed unicast resources when unicast resources of the resource AC device are insufficient.

5. A network device, wherein the network device is configured to perform the method of any one of claims 1-3.

6. A unicast Admission Control (AC) method, presetting a multicast resource threshold for multicast services and a unicast resource threshold for unicast services, the method comprising:
receiving, by a resource AC device, a unicast resource request and performing 5 unicast resource AC according to the unicast resource request;
sending, by the resource AC device, an external resource request to a network device **characterized by**: the sending, by a resource AC device, of the external resource request to the network device when a sum of currently occupied unicast resources and unicast resources required in the unicast request is bigger than the preset unicast resource threshold;
performing, by the network device, AC according to the external resources admitting (S1005), by the network device, the external resource request when a 10 sum of currently occupied multicast resources and unicast resources required in the external resource request is lower than the preset multicast resource threshold;
allocating (S1006), by the network device, multicast resources for the resource AC device sending, by the network device, an AC operation result to the resource AC device in response to the external resource request;
performing, by the resource AC device, a unicast operation according to the AC operation result returned by the network device in response to the external resource 15 request; and
forcing, by the network device, the resource AC device to disconnect certain unicast services and return the borrowed multicast resources when multicast resources of the network device are insufficient.

7. The method of claim 6, further comprising process of unicast stop:
receiving, by the resource AC device, a unicast resource release request, performing AC according to the unicast resource release request, releasing resources allocated according to the unicast resource request, and releasing resources allocated by the network device.

8. The method of claim 7, wherein the releasing the resources allocated by the 25 network device comprises:
releasing the resources when the network device detects that multicast resources are insufficient; or
releasing the resources when unicast resources required in a multicast request are insufficient after the network device receives the multicast request; or
releasing the resources according to a preset resource return policy; or
releasing the resources after a preset timer expires.

9. A unicast Admission Control (AC) system, comprising a network device and a resource AC device, a multicast resource threshold for multicast services is preset to the network device and a unicast resource threshold for unicast services is preset to the resource AC device, wherein:
the resource AC device is configured to: receive a unicast resource request, perform unicast resource AC according to the unicast resource request, the resource AC device (1201) being **characterised in that** is configured to: send an external resource request to the network device when a sum of currently occupied unicast resources and unicast resources required in the unicast request is bigger than the preset unicast resource threshold, and perform a unicast operation according to an AC operation result returned by the network device in response to the external resource request;
the network device is configured to: receive the external resource request, the network device being **characterized in that** is configured to: perform AC according to the external resource request admit the external resource request when a sum of currently occupied multicast resources and unicast resources required in the external resource request is lower than the preset multicast resource threshold, allocate multicast resources for the resource AC device (1201) and return the AC operation result to the resource AC device in response to the external resource request;
the network device is further configured to force the resource AC device to disconnect certain unicast services and return the borrowed multicast resources when multicast resources of the network device are insufficient.

10. A resource Admission Control (AC) device, wherein the network device is configured to perform the method of any one of claims 6-8.

## Patentansprüche

1. Multicast-Zulassungssteuerungsverfahren (Multicast-AC-Verfahren), das einen Multicast-Ressourcenschwellenwert für Multicast-Dienste und einen Unicast-Ressourcenschwellenwert für Unicast-Dienste vorgibt; wobei das Verfahren Folgendes umfasst:
Empfangen (s101) einer Multicast-Anforderung durch eine Netzvorrichtung und
Ausführen einer Multicast-Ressourcen-AC gemäß der Multicast-Anforderung;
Senden (s102) einer Anforderung externer Ressourcen zu einer Ressourcen-AC-Vorrichtung durch die Netzvorrichtung, **dadurch gekennzeichnet, dass** das Senden der Anforderung externer Ressourcen zur Ressourcen-AC-Vorrichtung durch die Netzvorrichtung ausgeführt wird, wenn eine Summe von gegenwärtig belegten Multicast-Ressourcen und einer im Multicast angeforderten Multicast-Ressource größer ist als der vorgegebene Multicast-Ressourcenschwellenwert;
Ausführen (s304) einer AC durch die Ressourcen-AC-Vorrichtung gemäß der Anforderung externer Ressourcen, Zulassen (s304) der Anforderung externer Ressourcen durch die Ressourcen-AC-Vorrichtung, wenn eine Summe von gegenwärtig belegten Unicast-Ressourcen und der in der Anforderung externer Ressourcen angeforderten Multicast-Ressourcen niedriger ist als der vorgegebene Unicast-Ressourcenschwellenwert;
Zuweisen (s305) von Unicast-Ressourcen für die Netzvorrichtung durch die Ressourcen-AC-Vorrichtung;
Senden eines AC-Operationsergebnisses zur Netzvorrichtung durch die Ressourcen-AC-Vorrichtung in Reaktion auf die Anforderung externer Ressourcen;
Ausführen einer Multicast-Operation durch die Netzvorrichtung gemäß dem AC-Operationsergebnis, das durch die Ressourcen-AC-Vorrichtung in Reaktion auf die Anforderung externer Ressourcen zurückgegeben wird; und
Zwingen der Netzvorrichtung durch die Ressourcen-AC-Vorrichtung, bestimmte Multicast-Dienste abzuschalten und die geliehenen Unicast-Ressourcen zurückzugeben, wenn Unicast-Ressourcen der Ressourcen-AC-Vorrichtung unzureichend sind.

2. Verfahren nach Anspruch 1, das ferner Folgendes umfasst:
Empfangen einer Multicast-Stoppanforderung durch die Netzvorrichtung;
Stoppen einer Multicast-Replikation gemäß der Multicast-Stoppanforderung, und
Freigeben von allen oder eines Teils von durch die Ressourcen-AC-Vorrichtung zugewiesenen Ressourcen.

3. Verfahren nach Anspruch 2, wobei das Freigeben der durch die Ressourcen-AC-Vorrichtung zugewiesenen Ressourcen Folgendes umfasst:
Freigeben der Ressourcen, wenn die Netzvorrichtung die Ressourcen nicht anfordert;
oder
Freigeben der Ressourcen, wenn die Ressourcen-AC-Vorrichtung detektiert, dass Unicast-Ressourcen unzureichend sind; oder
Freigeben der Ressourcen, wenn in einer Unicast-Anforderung angeforderte Unicast-Ressourcen unzureichend sind, nachdem die Ressourcen-AC-Vorrichtung die Unicast-Anforderung empfängt; oder
Freigeben der Ressourcen gemäß einer vorgegebenen Ressourcenrückgaberichtlinie;
oder
Freigeben der Ressourcen, nachdem ein vorgegebener Zeitgeber abläuft.

4. Multicast-Zulassungssteuerungssystem (Multicast-AC-System) mit einer Netzvorrichtung (1202) und einer Ressourcen-AC-Vorrichtung (1201), wobei ein Multicast-Ressourcenschwellenwert für Multicast-Dienste für die Netzvorrichtung (1202) vorgegeben ist und ein Unicast-Ressourcenschwellenwert für Unicast-Dienste für die Ressourcen-AC-Vorrichtung (1201) vorgegeben ist, wobei:
die Netzvorrichtung (1202) dazu konfiguriert ist: eine Multicast-Anforderung zu empfangen, eine Multicast-Ressourcen-AC gemäß der Multicast-Anforderung auszuführen, wobei die Netzvorrichtung (1202) **dadurch gekennzeichnet ist, dass** sie dazu konfiguriert ist: eine Anforderung externer Ressourcen zur Ressourcen-AC-Vorrichtung zu senden, wenn eine Summe von gegenwärtig belegten Multicast-Ressourcen und einer im Multicast angeforderten Multicast-Ressource größer ist als der vorgegebene Multicast-Ressourcenschwellenwert, und eine Multicast-Operation gemäß einem AC-Operationsergebnis, das durch die Ressourcen-AC-Vorrichtung in Reaktion auf die Anforderung externer Ressourcen zurückgegeben wird,
auszuführen; und
die Ressourcen-AC-Vorrichtung (1201) dazu konfiguriert ist: die Anforderung externer Ressourcen zu empfangen, wobei die Ressourcen-AC-Vorrichtung (1201) **dadurch gekennzeichnet ist, dass** sie dazu konfiguriert ist: eine AC gemäß der Anforderung externer Ressourcen auszuführen, die Anforderung externer Ressourcen zuzulassen, wenn eine Summe von gegenwärtig belegten Unicast-Ressourcen und der in der Anforderung externer Ressourcen angeforderten Multicast-Ressourcen niedriger ist als der vorgegebene Unicast-Ressourcenschwellenwert, Unicast-Ressourcen für die Netzvorrichtung zuzuweisen und in Reaktion auf die Anforderung externer Ressourcen das AC-Operationsergebnis zur Netzvorrichtung zurückzugeben;
die Ressourcen-AC-Vorrichtung (1201) ferner dazu konfiguriert ist, die Netzvorrichtung zu zwingen, bestimmte Multicast-Dienste abzuschalten und die geliehenen Unicast-Ressourcen zurückzugeben, wenn Unicast-Ressourcen der Ressourcen-AC-Vorrichtung unzureichend sind.

5. Netzvorrichtung, wobei die Netzvorrichtung dazu konfiguriert ist, das Verfahren nach einem der Ansprüche 1-3 auszuführen.

6. Unicast-Zulassungssteuerungsverfahren (Unicast-AC-Verfahren), das einen Multicast-Ressourcenschwellenwert für Multicast-Dienste und einen Unicast-Ressourcenschwellenwert für Unicast-Dienste vorgibt, wobei das Verfahren Folgendes umfasst:
Empfangen einer Unicast-Ressourcenanforderung durch eine Ressourcen-AC-Vorrichtung und Ausführen einer Unicast-Ressourcen-AC gemäß der Unicast-Ressourcenanforderung;
Senden einer Anforderung externer Ressourcen zu einer Netzvorrichtung durch die Ressourcen-AC-Vorrichtung, **gekennzeichnet durch**: das Senden der Anforderung externer Ressourcen **durch** eine Ressourcen-AC-Vorrichtung zur Netzvorrichtung, wenn eine Summe von gegenwärtig belegten Unicast-Ressourcen und von in der Unicast-Anforderung angeforderten Unicast-Ressourcen größer ist als der vorgegebene Unicast-Ressourcenschwellenwert;
Ausführen einer AC **durch** die Netzvorrichtung gemäß den externen Ressourcen,
Zulassen (s1005) der Anforderung externer Ressourcen **durch** die Netzvorrichtung,
wenn eine Summe von gegenwärtig belegten Multicast-Ressourcen und in der Anforderung externer Ressourcen angeforderten Unicast-Ressourcen niedriger ist als der vorgegebene Multicast-Ressourcenschwellenwert;
Zuweisen (s1006) von Multicast-Ressourcen für die Ressourcen-AC-Vorrichtung durch die Netzvorrichtung;
Senden eines AC-Operationsergebnisses zur Ressourcen-AC-Vorrichtung **durch** die Netzvorrichtung in Reaktion auf die Anforderung externer Ressourcen;
Ausführen einer Unicast-Operation **durch** die Ressourcen-AC-Vorrichtung gemäß dem AC-Operationsergebnis, das **durch** die Netzvorrichtung in Reaktion auf die Anforderung externer Ressourcen zurückgegeben wird; und
Zwingen der Ressourcen-AC-Vorrichtung **durch** die Netzvorrichtung, bestimmte Unicast-Dienste abzuschalten und die geliehenen Multicast-Ressourcen zurückzugeben, wenn die Multicast-Ressourcen der Netzvorrichtung unzureichend sind.

7. Verfahren nach Anspruch 6, das ferner einen Prozess eines Unicast-Stopps umfasst:
Empfangen einer Unicast-Ressourcen-Freigabeanforderung durch die Ressourcen-AC-Vorrichtung, Ausführen einer AC gemäß der Unicast-Ressourcen-Freigabeanforderung, Freigeben von gemäß der Unicast-Ressourcenanforderung zugewiesenen Ressourcen und Freigeben von durch die Netzvorrichtung zugewiesenen Ressourcen.

8. Verfahren nach Anspruch 7, wobei das Freigeben der durch die Netzvorrichtung zugewiesenen Ressourcen Folgendes umfasst:
Freigeben der Ressourcen, wenn die Netzvorrichtung detektiert, dass Multicast-Ressourcen unzureichend sind; oder
Freigeben der Ressourcen, wenn in einer Multicast-Anforderung angeforderte Unicast-Ressourcen unzureichend sind, nachdem die Netzvorrichtung die Multicast-Anforderung empfängt; oder
Freigeben der Ressourcen gemäß einer vorgegebenen Ressourcenrückgaberichtlinie;
oder
Freigeben der Ressourcen, nachdem ein vorgegebener Zeitgeber abläuft.

9. Unicast-Zulassungssteuerungssystem (Unicast-AC-System) mit einer Netzvorrichtung und einer Ressourcen-AC-Vorrichtung, wobei ein Multicast-Ressourcenschwellenwert für Multicast-Dienste für die Netzvorrichtung vorgegeben ist und ein Unicast-Ressourcenschwellenwert für Unicast-Dienste für die Ressourcen-AC-Vorrichtung vorgegeben ist, wobei:
die Ressourcen-AC-Vorrichtung dazu konfiguriert ist: eine Unicast-Ressourcenanforderung zu empfangen, eine Unicast-Ressourcen-AC gemäß der Unicast-Ressourcenanforderung auszuführen, wobei die Ressourcen-AC-Vorrichtung (1201) **dadurch gekennzeichnet ist, dass** sie dazu konfiguriert ist: eine Anforderung externer Ressourcen zur Netzvorrichtung zu senden, wenn eine Summe von gegenwärtig belegten Unicast-Ressourcen und in der Unicast-Anforderung angeforderten Unicast-Ressourcen größer ist als der vorgegebene Unicast-Ressourcenschwellenwert, und eine Unicast-Operation gemäß einem AC-Operationsergebnis, das durch die Netzvorrichtung in Reaktion auf die Anforderung externer Ressourcen zurückgegeben wird, auszuführen;
die Netzvorrichtung dazu konfiguriert ist: die Anforderung externer Ressourcen zu empfangen, wobei die Netzvorrichtung **dadurch gekennzeichnet ist, dass** sie dazu konfiguriert ist: eine AC gemäß der Anforderung externer Ressourcen auszuführen,
die Anforderung externer Ressourcen zuzulassen, wenn eine Summe von gegenwärtig belegten Multicast-Ressourcen und in der Anforderung externer Ressourcen angeforderten Unicast-Ressourcen niedriger ist als der vorgegebene Multicast-Ressourcenschwellenwert, Multicast-Ressourcen für die Ressourcen-AC-Vorrichtung (1201) zuzuweisen und in Reaktion auf die Anforderung externer Ressourcen das AC-Operationsergebnis zur Ressourcen-AC-Vorrichtung zurückzugeben;
die Netzvorrichtung ferner dazu konfiguriert ist, die Ressourcen-AC-Vorrichtung zu zwingen, bestimmte Unicast-Dienste abzuschalten und die geliehenen Multicast-Ressourcen zurückzugeben, wenn die Multicast-Ressourcen der Netzvorrichtung unzureichend sind.

10. Ressourcen-Zulassungssteuerungsvorrichtung (Ressourcen-AC-Vorrichtung), wobei die Netzvorrichtung dazu konfiguriert ist, das Verfahren nach einem der Ansprüche 6-8 auszuführen.

## Revendications

1. Procédé de Commande d'Admission (CA) en multidiffusion, préétablissant un seuil de ressources de multidiffusion pour des services de multidiffusion et un seuil de ressources d'unidiffusion pour des services d'unidiffusion, le procédé comprenant :
la réception (s101), par un dispositif de réseau, d'une demande de multidiffusion et
l'exécution d'une CA de ressources de multidiffusion en fonction de la demande de multidiffusion ;
l'envoi (s102), par le dispositif de réseau, d'une demande de ressources externes à un dispositif de CA de ressources, **caractérisé en ce que** : l'envoi, par le dispositif de réseau, de la demande de ressources externes au dispositif de CA de ressources, est fait quand une somme de ressources de multidiffusion présentement occupées et de ressources de multidiffusion requises dans la multidiffusion est supérieure au seuil de ressources de multidiffusion préétabli ;
l'exécution (s304), par le dispositif de CA de ressources, d'une CA en fonction de la demande de ressources externes, l'admission (s304), par le dispositif de CA de ressources, de la demande de ressources externes, quand une somme de ressources d'unidiffusion présentement occupées et des ressources de multidiffusion requises dans la demande de ressources externes est inférieure au seuil de ressources d'unidiffusion préétabli ;
l'attribution (s305), par le dispositif de CA de ressources, de ressources d'unidiffusion pour le dispositif de réseau ;
l'envoi, par le dispositif de CA de ressources, d'un résultat d'opération de CA au dispositif de réseau en réponse à la demande de ressources externes ;
l'exécution, par le dispositif de réseau, d'une opération de multidiffusion en fonction du résultat d'opération de CA renvoyé par le dispositif de CA de ressources en réponse à la demande de ressources externes ; et
le forçage, par le dispositif de CA de ressources, du dispositif de réseau à déconnecter certains services de multidiffusion et à renvoyer les ressources d'unidiffusion empruntées quand les ressources d'unidiffusion du dispositif de CA de ressources sont insuffisantes.

2. Procédé selon la revendication 1, comprenant en outre :
la réception, par le dispositif de réseau, d'une demande d'arrêt de multidiffusion ;
l'arrêt d'une reproduction en multidiffusion en fonction de la demande d'arrêt de multidiffusion ; et
la libération de tout ou partie des ressources attribuées au dispositif de CA de ressources.

3. Procédé selon la revendication 2, dans lequel la libération des ressources attribuées par le dispositif de CA de ressources comprend :
la libération des ressources quand le dispositif de réseau n'a pas besoin des ressources ; ou
la libération des ressources quand le dispositif de CA de ressources détecte que les ressources d'unidiffusion sont insuffisantes ; ou
la libération des ressources quand les ressources d'unidiffusion requises dans une demande d'unidiffusion sont insuffisantes après que le dispositif de CA de ressources a reçu la demande d'unidiffusion ; ou
la libération des ressources en fonction d'une règle de renvoi de ressources préétablie ; ou
la libération des ressources après l'expiration d'une temporisation préétablie.

4. Système de Commande d'Admission (CA) en multidiffusion, comprenant un dispositif de réseau (1202) et un dispositif de CA de ressources (1201), un seuil de ressources de multidiffusion pour des services de multidiffusion étant préétabli pour le dispositif de réseau (1202) et un seuil de ressources d'unidiffusion pour des services d'unidiffusion étant préétabli pour le dispositif de CA de ressources (1201), dans lequel :
le dispositif de réseau (1202) est configuré pour : recevoir une demande de multidiffusion, exécuter une CA de ressources de multidiffusion en fonction de la demande de multidiffusion, le dispositif de réseau (1202) étant **caractérisé en ce qu'**il est configuré pour : envoyer une demande de ressources externes au dispositif de CA de ressources quand une somme de ressources de multidiffusion présentement occupées et de ressources de multidiffusion requises dans la multidiffusion est supérieure au seuil de ressources de multidiffusion préétabli, et exécuter une opération de multidiffusion en fonction d'un résultat d'opération de CA renvoyé par le dispositif de CA de ressources en réponse à la demande de ressources externes ; et
le dispositif de CA de ressources (1201) est configuré pour : recevoir la demande de ressources externes, le dispositif de CA de ressources (1201) étant **caractérisé en ce qu'**il est configuré pour : exécuter une CA en fonction de la demande de ressources externes, admettre la demande de ressources externes quand une somme de ressources d'unidiffusion présentement occupées et des ressources de multidiffusion requises dans la demande de ressources externes est inférieure au seuil de ressources d'unidiffusion préétabli, attribuer des ressources d'umidiffusion pour le dispositif de réseau et renvoyer le résultat d'opération de CA au dispositif de réseau en réponse à la demande de ressources externes ;
le dispositif de CA de ressources (1201) est configuré en outre pour forcer le dispositif de réseau à déconnecter certains services de multidiffusion et renvoyer les ressources d'unidiffusion empruntées quand les ressources d'unidiffusion du dispositif de CA de ressources sont insuffisantes.

5. Dispositif de réseau, lequel est configuré pour exécuter le procédé selon l'une quelconque des revendications 1 à 3.

6. Procédé de Commande d'Admission (CA) en unidiffusion, préétablissant un seuil de ressources de multidiffusion pour des services de multidiffusion et un seuil de ressources d'unidiffusion pour des services d'unidiffusion, le procédé comprenant :
la réception, par un dispositif de CA de ressources, d'une demande de ressources d'unidiffusion et l'exécution d'une CA de ressources d'unidiffusion en fonction de la demande de ressources d'unidiffusion ;
l'envoi, par le dispositif de CA de ressources, d'une demande de ressources externes à un dispositif de réseau, **caractérisé par** : l'envoi, par un dispositif de CA de ressources, de la demande de ressources externes au dispositif de réseau, quand une somme de ressources d'unidiffusion présentement occupées et de ressources d'unidiffusion requises dans la demande d'unidiffusion est supérieure au seuil de ressources d'unidiffusion préétabli ;
l'exécution, par le dispositif de réseau, d'une CA en fonction des ressources externes,
l'admission (s1005), par le dispositif de réseau, de la demande de ressources externes,
quand une somme de ressources de multidiffusion présentement occupées et de ressources d'unidiffusion requises dans la demande de ressources externes est inférieure au seuil de ressources de multidiffusion préétabli ;
l'attribution (s1006), par le dispositif de réseau, de ressources de multidiffusion pour le dispositif de CA de ressources ;
l'envoi, par le dispositif de réseau, d'un résultat d'opération de CA au dispositif de CA de ressources en réponse à la demande de ressources externes ;
l'exécution, par le dispositif de CA de ressources, d'une opération d'unidiffusion en fonction du résultat d'opération de CA renvoyé par le dispositif de réseau en réponse à la demande de ressources externes ; et
le forçage, par le dispositif de réseau, du dispositif de CA de ressources à déconnecter certains services d'unidiffusion et à renvoyer les ressources de multidiffusion empruntées quand les ressources de multidiffusion du dispositif de réseau sont insuffisantes.

7. Procédé selon la revendication 6 comprenant en outre un processus d'arrêt d'unidiffusion :
la réception, par le dispositif de CA de ressources, d'une demande de libération de ressources d'unidiffusion, l'exécution d'une CA en fonction de la demande de libération de ressources d'unidiffusion, la libération des ressources attribuées en fonction de la demande de ressources d'unidiffusion, et la libération des ressources attribuées par le dispositif de réseau.

8. Procédé selon la revendication 7, dans lequel la libération des ressources attribuées par le dispositif de réseau comprend :
la libération des ressources quand le dispositif de réseau détecte que les ressources de multidiffusion sont insuffisantes ; ou
la libération des ressources quand les ressources d'unidiffusion requises dans une demande de multidiffusion sont insuffisantes après que le dispositif de réseau a reçu la demande de multidiffusion ; ou
la libération des ressources en fonction d'une règle de renvoi de ressources préétablie ; ou
la libération des ressources après l'expiration d'une temporisation préétablie.

9. Système de Commande d'Admission (CA) en unidiffusion, comprenant un dispositif de réseau et un dispositif de CA de ressources, un seuil de ressources de multidiffusion pour des services de multidiffusion étant préétabli pour le dispositif de réseau et un seuil de ressources d'unidiffusion pour des services d'unidiffusion étant préétabli pour le dispositif de CA de ressources, dans lequel :
le dispositif de CA de ressources est configuré pour : recevoir une demande de ressources d'unidiffusion, exécuter une CA de ressources d'unidiffusion en fonction de la demande de ressources d'unidiffusion, le dispositif de CA de ressources (1201) étant **caractérisé en ce qu'**il est configuré pour : envoyer une demande de ressources externes au dispositif de réseau quand une somme de ressources d'unidiffusion présentement occupées et de ressources d'unidiffusion requises dans la demande d'unidiffusion est supérieure au seuil de ressources d'unidiffusion préétabli, et
exécuter une opération d'unidiffusion en fonction d'un résultat d'opération de CA renvoyé par le dispositif de réseau en réponse à la demande de ressources externes ;
le dispositif de réseau est configuré pour : recevoir la demande de ressources externes, le dispositif de réseau étant **caractérisé en ce qu'**il est configuré pour :
exécuter une CA en fonction de la demande de ressources externes, admettre la demande de ressources externes quand une somme de ressources de multidiffusion présentement occupées et de ressources d'unidiffusion requises dans la demande de ressources externes est inférieure au seuil de ressources de multidiffusion préétabli,
attribuer des ressources de multidiffusion pour le dispositif de CA de ressources (1201) et renvoyer le résultat d'opération de CA au dispositif de CA de ressources en réponse à la demande de ressources externes ;
le dispositif de réseau est configuré en outre pour forcer le dispositif de CA de ressources à déconnecter certains services d'unidiffusion et renvoyer les ressources de multidiffusion empruntées quand les ressources de multidiffusion du dispositif de réseau sont insuffisantes.

10. Dispositif de Commande d'Admission (CA) de ressources, dans lequel le dispositif de réseau, est configuré pour exécuter le procédé selon l'une quelconque des revendications 6 à 8.
